# EUROPEAN PATENT APPLICATION

(11) **EP 4 794 290 A1**
(43) Date of publication of application: **19.08.2026**
(21) Application number: 26158983.2
(22) Date of filing: 17.02.2026
(51) Int. Cl.: H04L 43/026, H04L 41/14, H04L 41/16, G06F 40/20, H04L 9/40

(54) **METHODS FOR OPTIMIZING A REPRESENTATION FOR DETECTING A PATTERN OF A TRAFFIC FLOW AND DEVICES THEREOF**

(30) Priority: 17.02.2025 US 202519055322
(71) Applicant: F5, INC., Seattle, WA 98104 (US)
(72) Inventor: KIT, Dmitry M., Seattle, WA, 98104 (US); BAUGHMAN, Kevin W., Seattle, WA, 98104 (US); RISIGO, William, Seattle, WA, 98104 (US); BAKER, Joseph Daniel, Seattle, WA, 98104 (US)
(74) Representative: Savi, Massimiliano

(57) **Abstract**

Methods, network traffic manager apparatuses, non-transitory computer readable media, and systems that optimize a representation for detecting a pattern of a traffic flow are disclosed. The method includes retrieving a representation and dataset associated with the representation from storage and prompting a natural language processing model to transform the retrieved representation to a first candidate representation different than the retrieved representation based on the dataset. Then the method includes inputting the first candidate representation into a simulator to generate one or more first candidate metric values and evaluating whether to replace the retrieved representation with the first candidate representation based on the generated one or more first candidate metric values. This process may be iteratively implemented to optimize the generated candidate representation.

## Description

### FIELD

This disclosure relates to optimize a representation, in particular, to optimize a representation and deploy an optimized representation on a network device for detecting a pattern of a traffic flow in a network.

### BACKGROUND

Detection of certain pattern(s) of traffic flows in a network can be utilized for a variety of different purposes, such as data traffic management, data analysis, security, and load balancing by way of example. Typically, a variety of network devices are utilized to perform this pattern detection based on set of signatures or rules while processing traffic flows as they come in. Although this can be effective, there could be a large number of signatures or rules which can make this pattern detection process very challenging and inefficient. For example, in order to block or forward a certain type of traffic flow, it may be hard to determine, among large numbers of signatures or rules, which signature(s) or rule(s) to enable to manage the traffic flow.

Another concern is that the network devices being utilized for pattern detection may have different constraints in terms of hardware or software resources (e.g., memory, networking capabilities, etc.) limiting their capabilities and effectiveness. For example, in a scenario involving a large volume of traffic flows (e.g., requests to application server(s) in the network), this number may be too large for the network device to apply some pattern matchers on individual requests. This situation is not uncommon nowadays in a typical network environment and as a result there may not be an opportunity to spend sufficient amount of time to effectively perform pattern detection for each of the traffic flows without causing timeouts or significant delays in responses.

### SUMMARY

This disclosure is directed to methods and apparatus related to optimizing a representation for detecting a pattern of a traffic flow. Relevant non-transitory computer readable medium and network traffic management systems are also disclosed.

According to an aspect of the disclosure, a method may be implemented by a network traffic management system, where the network traffic management system may comprise one or more network traffic management apparatuses, client devices, or server devices. The method may comprise retrieving a representation and dataset associated with the representation from storage and prompt a natural language processing model to transform the retrieved representation to a first candidate representation based on the dataset, where the first candidate representation is different than the retrieved representation. Next, the method inputs the first candidate representation into a simulator to generate one or more first candidate metric values corresponding to one or more preferred metric values. The method further evaluates whether to replace the retrieved representation with the first candidate representation based on the generated one or more first candidate metric values and the one or more preferred metric values. In response to the evaluation providing an indication to replace the retrieved representation with the first candidate representation, the method deploys the first candidate representation on a network apparatus of a network managed by the network traffic management system, where the network device is configured to detect a pattern of a traffic flow of the network using the deployed first candidate representation.

According to another aspect of the disclosure, an apparatus may comprise memory comprising programmed instructions stored in the memory and one or more processors configured to be capable of executing the programmed instructions stored in the memory to: retrieve a representation and dataset associated with the representation from storage and prompt a natural language processing model to transform the retrieved representation to a first candidate representation based on the dataset, the first candidate representation being different than the retrieved representation. The one or more processors may further input the first candidate representation into a simulator to generate one or more first candidate metric values corresponding to one or more preferred metric values and evaluate whether to replace the retrieved representation with the first candidate representation based on the generated one or more first candidate metric values and the one or more preferred metric values. In response to the evaluation providing an indication to replace the retrieved representation with the first candidate representation, the one or more processors may deploy the first candidate representation on a network apparatus of a network managed by the network traffic management system, where the network device is configured to detect a pattern of a traffic flow of the network using the deployed first candidate representation.

According to another aspect of the disclosure, a non-transitory computer readable medium may have stored thereon instructions for protecting a network service device, comprising executable code which when executed by one or more processors, causes the one or more processors to retrieve a representation and dataset associated with the representation from storage and prompt a natural language processing model to transform the retrieved representation to a first candidate representation based on the dataset, the first candidate representation being different than the retrieved representation. The executable code may further cause the one or more processors to input the first candidate representation into a simulator to generate one or more first candidate metric values corresponding to one or more preferred metric values, and evaluate whether to replace the retrieved representation with the first candidate representation based on the generated one or more first candidate metric values and the one or more preferred metric values. In response to the evaluation providing an indication to replace the retrieved representation with the first candidate representation, the executable code may further cause the one or more processors to deploy the first candidate representation on a network apparatus of a network managed by the network traffic management system, where the network device is configured to detect a pattern of a traffic flow of the network using the deployed first candidate representation.

According to another aspect of the disclosure, a network traffic management system comprising one or more traffic management apparatuses, server devices, or client devices, where the network traffic management system may comprise memory comprising programmed instructions stored thereon and one or more processors configured to be capable of executing the stored programmed instructions to retrieve a representation and dataset associated with the representation from storage and prompt a natural language processing model to transform the retrieved representation to a first candidate representation based on the dataset, the first candidate representation being different than the retrieved representation. The one or more processors may further input the first candidate representation into a simulator to generate one or more first candidate metric values corresponding to one or more preferred metric values and evaluate whether to replace the retrieved representation with the first candidate representation based on the generated one or more first candidate metric values and the one or more preferred metric values. In response to the evaluation providing an indication to replace the retrieved representation with the first candidate representation, the one or more processors may deploy the first candidate representation on a network apparatus of a network managed by the network traffic management system, where the network device is configured to detect a pattern of a traffic flow of the network using the deployed first candidate representation.

Examples of this technology provide a number of advantages including providing methods, non-transitory computer readable media, apparatuses and systems that optimize and deploy an optimized representation on a network device for detecting a pattern of a traffic flow in a network. Accordingly, with this optimized representation one or more network performances may be improved, and a better user experience may be achieved. In some examples, by iteratively performing the operations described in this disclosure to combine or discard the original or low efficient representations, the number of representations may potentially be reduced to a manageable value. Moreover, by allowing a user to specify preferred metric value(s), flexibility can be introduced into this improved solution depending on what kind of network device(s) is used for detecting a pattern. The above and other aspects and advantages and their implementations are described in greater detail in the drawings, the descriptions, and the claims below.

### BRIEF DESCRIPTION OF THE DRAWINGS

The foregoing and other aspects of the present disclosure are best understood from the following detailed description when read in connection with the accompanying drawings. For the purpose of illustrating this technology, specific examples are shown in the drawings, it being understood, however, that the examples of this technology are not limited to the specific instrumentalities disclosed. Included in the drawings are the following Figures:
FIG. 1 illustrates an exemplary network traffic management system;
FIG. 2 illustrates an exemplary execution environment of a network traffic management apparatus;
FIG. 3 illustrates an exemplary block diagram of a network traffic management apparatus;
FIG. 4 illustrates a flow diagram of an exemplary method for optimizing a representation being executed at a network traffic management apparatus;
FIG. 5 illustrates an exemplary data source for performing the exemplary method illustrated in FIG. 4;
FIG. 6 illustrates an exemplary flow diagram with the data source illustrated in FIG. 5 as input data to perform the method illustrated in FIG. 4;
FIG. 7 illustrates an exemplary flow diagram for prompting a natural language processing model to generate a candidate representation;
FIG. 8 illustrates an exemplary preference selection provided for a user to specify preferred metric values;
FIG. 9 illustrates an exemplary simulation and evaluation process;
FIG. 10 illustrates another exemplary simulation and evaluation process;
FIG. 11 illustrates a further exemplary simulation and evaluation process; and
FIG. 12 illustrates an exemplary application scenario for performing the operations described in this disclosure.

### DETAILED DESCRIPTION

The present disclosure may be understood more readily by reference to the following detailed description of exemplary examples. Before the exemplary implementations and examples of the methods, devices, and systems according to the present disclosure are disclosed and described, it is to be understood that implementations are not limited to those described within this disclosure. Numerous modifications and variations therein will be apparent to those skilled in the art and remain within the scope of the disclosure. It is also to be understood that the terminology used herein is for describing specific implementations only and is not intended to be limiting. Some implementations of the disclosed technology will be described more fully hereinafter with reference to the accompanying drawings. This disclosed technology may, however, be embodied in many different forms and should not be construed as limited to the implementations set forth therein.

In the following description, numerous specific details are set forth. But it is to be understood that examples of the disclosed technology may be practiced without these specific details. In other instances, well-known components, structures, and techniques have not been shown in detail in order not to obscure an understanding of this description. References to "an implementation," "an example," "some examples," etc., indicate that the implementation(s) of the disclosed technology so described may include a particular feature, structure, or characteristic, but not every implementation necessarily includes the particular feature, structure, or characteristic. Further, repeated use of the phrase "in some examples" does not necessarily refer to the same implementation, although it may. Additionally, it is to be understood that particular features, structures, or characteristics that described in different examples, implementations or the like, may be further combined in various ways and being implemented in one or more implementations.

A network traffic management system may relate to a set of tools, processes, devices, and relevant technologies to control and optimize data flow within a computer network. Such network traffic management system may monitor, analyze, control and balance network traffic to maintain the performance and reliability of a computer network. A network traffic management system may be implemented in various network topologies. Devices utilized and topologies designed in a network environment may depend on specific requirements and a scale of a network. Factors may include such as the size of the network, its geographic spread, the types of applications and services being offered, the organization's traffic management requirements, etc. For example, the network traffic management system may be implemented in a centralized, distributed, or cloud-based topology in various networks. The network traffic management system may be executed in various networks, include but not limited to, Local Area Networks (LAN), Wide Area Networks (WAN), Metropolitan Area Network (MAN), data center networks, cloud networks, hybrid networks, or any appropriate existing networks or the ones that may be developed in the future. Various devices may be involved in the network traffic management system, depending on the specific network and topology being used. For example, edge routers or switches, firewalls, proxies, load balancers, Content Delivery Network (CDN) servers, application servers, etc. may be included in a network traffic management system.

A network traffic management apparatus may refer to an apparatus executing one or more operations as will be described below to optimize a representation according to various examples of this disclosure. The network traffic management apparatus may reside at any network devices *(e.g.,* a router, a switch, a Smart Network Interface Card (Smart NIC), a device providing a combination of those functionalities such as BIG-IP device, etc.) or components that has an ability to intercept, analyze and process traffic flow transmitted between a client device to a network service device, reside at any network device or components communicatively connected thereto, to implement the operation(s) in this disclosure.

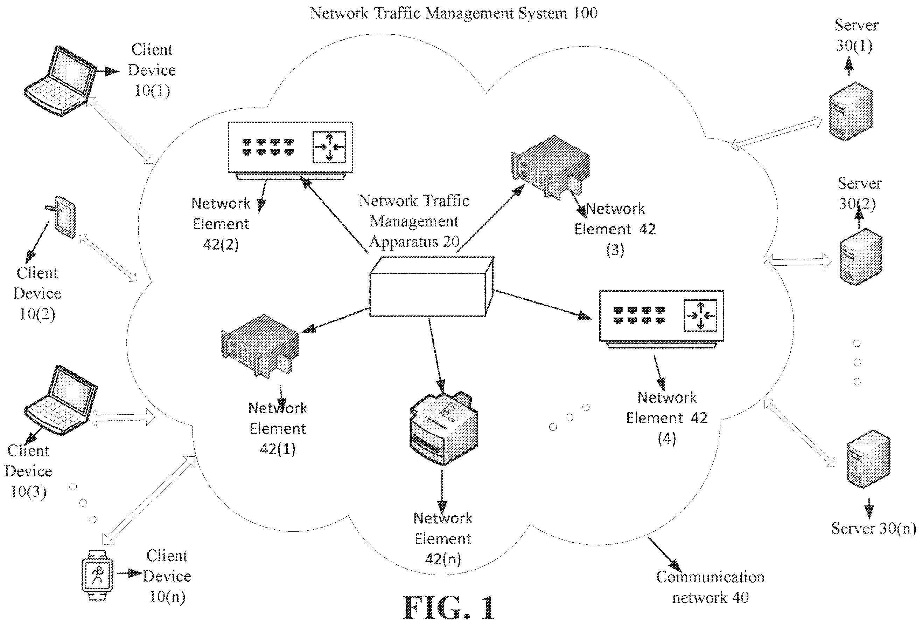

A network service device may be any network device that provides a service to a client device. The network service device may be implemented in various ways, such as hardware, software, firmware, or any combination thereof. For example, the network service device may be a server of the network traffic management system (e.g., a web application server, such as one of the servers 30(1)-30(n) illustrated in FIG. 1 which will be described in the following), or a virtual machine, virtual server, container, engine, instance or the like that resides at a server or other network elements.

A client device may refer to any end-user device that may send or initiate a request to the network service device to establish or continue to a communicative connection with the network service device. Similar to the network service device, the client device may be implemented in various ways, including but not limited to, hardware, software, firmware, or any combination thereof.

A representation may comprise one or more detection instructions for detecting pattern(s) of traffic flows. In this example, the pattern may refer to any characteristics of a traffic flow, including but not limited to, an attack or a specified type of attach, characterized uses of a particular network functionality (*e.g*., a specific network service or web application or an app) by client devices, a utilization of certain type of network resources by a particular network functionality, or a user-defined pattern (*e.g*., detect the times and/or frequency that certain API(s) is used in specific way(s)), etc. One or a series of detection instructions included in one representation may describe, either separately or collectively, one or a plurality of characters in traffic flows existence of which may indicate a matching of the traffic flows with the pattern that the representation is supposed to embody and detect. Representations are different from each other by having different detection instruction(s) constituting the representations. Therefore, executing the detection instruction(s) within a representation may enable a network device to fulfill the pattern detections. Depending on the specific network environment and tools utilized thereof, the detection instructions may be in any appropriate form(s) as long as they can be utilized by a network device to detect various interesting patterns of a traffic flow. By way of example, the detection instructions may be in forms of, including but not limited to, regular expressions, irules, python or DEX programs. The regular expressions may be used in a plurality of programing languages and tools to specify patterns in various tasks *(e.g.,* a searching task). Python function or code may be executed on a device having more resources at a cost of latency. Irules may be executed on a router for routing traffic during which a bunch of different pattern recognition statements may be executed against coming in traffic flow. Therefore, irules may be utilized for pattern detection wherein a destination to be routed may indicate a matching of a pattern being detected *(e.g.,* if the destination is access blocked it may indicate an attack). Therefore, in the following description, the detection instruction may be called regular expressions in some scenarios, or python function(s) if it's coded and represented in python.

Traffic flow may refer to one or more packets (*e.g*., data packet, control packet) that being transmitted in a network. The traffic flow may be a data stream or a single packet which may match one or more patterns that a user may be interested in. In this example, the "user" refers to an individual or an enterprise (*e.g*., its operator) who values the pattern detection for various purpose as mentioned above. It is to be understood that such user may be a user of a client device, a provider of a network service, an administrator of a server, a firewall, an enterprise that offers security, managing, or analyzing services or plays any of such role in relation to network traffic flows, or any combination thereof.

A network device on which an optimized representation is deployed may refer to any physical or virtual network device or apparatus that sits between a client device and a network service device and processes data packets or traffic flow. By way of example, the network traffic management apparatus or the device(s) or apparatus on which the network traffic management apparatus resides on, can be such a network device. As another example, any device or apparatus that connects to the network traffic management apparatus, either directly or indirectly, can be such a network device as well (*e.g*., Internet of Things (IoT) devices).

FIG. 1 illustrates an exemplary simplified network traffic management system 100 according to an example of this disclosure. As illustrated in FIG. 1, the network traffic management system 100 may comprise a plurality of client devices 10(1)-10(n), a communication network 40, and a plurality of servers 30(1)-30(n) serving the client devices 10(1)-10(n). The client devices 10(1)-10(n) and servers 30(1)-30(n) may communicatively connect with each other via the communication network 40.

Referring to FIG. 1, as an exemplary implementation of the client device discussed above, one of the client devices 10(1)-10(n) may send a request to one of the servers 30(1)-30(n) for a service (*e.g*., via a web browser installed at one of the client devices 10(1)-10(n)). The client devices 10(1)-10(n) may also be referred to as a "client," "user equipment," or "user equipment device," which may include but is not limited to a mobile phone, smartphone, tablet, laptop computer, a smart electronics, a wearable device, a video surveillance device, an industrial wireless or wired sensors, or an appliance including an air conditioner, a television, a refrigerator, an oven, an IoT device, and the like, or other devices that are capable of communicating wirelessly over a network. Moreover, one or more of the client devices 10(1)-10(n) may also be a proxy or a server or any network elements or devices, which may forward above discussed request and thereby initiate traffic flow towards one of the servers 30(1)-30(n) on behalf of its internal user equipment(s). For example, one or more of the client devices 10(1)-10(n) may be a proxy *(e.g.,* a forward proxy) of a private network, which forwards a request message that it received from a client device isolated within the private network. In this way, the proxy sends a request message on behalf of the isolated device and allows it to be served by one of the servers 30(1)-30(n). In this scenario, the proxy plays the role of one of the client devices 10(1)-10(n) in the network traffic management system 100 as illustrated in FIG. 1.

Continuing to refer to FIG. 1, as an exemplary implementation of the network service device discussed above, the one of the servers 30(1)-30(n) may respond to one of the client devices 10(1)-10(n) and have one or more interactions with one of the client devices 10(1)-10(n) to provide the requested service or data, in response to receiving the request from one of the client devices 10(1)-10(n) via the communication network 40. The servers 30(1)-(n) may be any type of server to serve a client device. For example, the servers 30(1)-(n) may be application servers that run applications, manage, and execute various tasks related to the processing of client device's requests within the network environment. Various services may be provided by the servers 30(1)-(n).

As illustrated in FIG. 1, the communication network 40 may comprise a plurality of network elements 42(1)-42(n) to provide connectivity and data processing and transmission. Depending on the topology and features of the communication network 40, there may be various types of network elements 42(1)-42(n) *(e.g.,* a router, a proxy, a load balancer, a firewall, etc.) to perform designated functionalities. As illustrated in FIG. 1, one of the client devices 10(1)-10(n) may communicatively connected to the communication network 40. When one of the client devices 10(1)-10(n) sends a message to request a service provided by one of the servers 30(1)-30(n), the message may go through some of the network elements 42(1)-42(n) before reaching its destination. Therefore, as intermediate device that sits between the client devices 10(1)-10(n) and the servers 30(1)-30(n), such network elements 42(1)-42(n) can be a type of network device mentioned above to detect a pattern of traffic flows. Accordingly, such network elements 42(1)-42(n) or any appropriate device(s) connected thereto may be deployed with the optimized representations that discussed in this disclosure. It is to be understood that different network technologies may be applied by the communication network 40. For example, communication network 40 may be one or more wired or wireless public or private networks, based on any industry-standard protocols, such as Ethernet, Wi-Fi, Satellite Networks, 4G/LTE (Long-Term Evolution), 5G, and various internet protocols like TCP/IP. The communication network 40 may also be formed by connecting appropriate number of networks together as needed.

In the network environment illustrated in FIG. 1, to protect the servers 30(1)-30(n) from an attack or for purpose of anti-fraud *(e.g.,* anti-bot), or for managing purpose *(e.g.,* load balancing, analysis such as statistics about usage characters of certain network services or applications, resource usage by certain network services or applications, etc.), detections of a pattern or certain patterns of traffic flows can be performed at appropriate devices. As for such detections, utilizing a complex machine learning model may give precise recognition and therefore accurate determination regarding whether a given traffic flow matches an interesting pattern (*e.g*., an attack). However, as the traffic flow which is coming into one of network elements 42(1)-(n) can be too large to process due to limited hardware and/or software resources and therefore limited processing capability of a given network element, employing a machine learning model on such network devices may be infeasible. Even making a hardware upgrade or deploying extra device(s) is tolerable from the cost perspective, it's still not a practical solution due to long or sometimes huge latency introduced by performing a pattern detection.

As an alternative solution, a series of regular expressions or signatures that can recognize or identify a given pattern (*e.g*., a specific type of attack) may be generated to compose a representation. Then such representation may be employed on a network device for detecting and filtering out traffic flows matching that pattern. Compared to the machine learning model solution, executing this representation is relatively more cost-effective (*e.g*., consumes less resource and introduces less latency). An issue of such a solution is that there is a huge number of regular expressions or signatures available to use and at least certain amount of them are independent of each other. The result is that it's common that there is redundancy in a representation. By way of example, a representation comprising *select. *union, select. *public, select. *where, select.* **pg_sleep* may describe an attack in a log of a web request. However, another smaller size representation that has a smaller number of regular expressions, by way of example a single regular expression *select. *from,* may also similarly describe the same attack and therefore can detect a web request comprising such attack at a similar or comparable accuracy. In other words, different regular expressions or different composition of regular expressions may detect and identify the same important data embodying a pattern of traffic flows. This means different representations may be used to perform pattern detections with similar outcomes but different processing performance *(e.g.,* the resource consumed, the throughput and the latency). In this example, the number of regular expressions that a representation comprises may impact the processing performance for detecting pattern(s) of traffic flows with the representation. Because even though executing a single regular expression is cheap, executing a representation comprising a bunch of or a large number of regular expressions against a significant volume of traffic flows is no longer cheap. Therefore, an optimized representation potentially can improve the processing performance when performing pattern detections against traffic flows. In the following, various examples and operations for optimizing a representation will be described. Referring to FIG. 1, those operations may be performed on the network traffic management apparatus 20, which is deployed at any appropriate device or component that sits between a client device and a network service device along a network communication connection established therebetween (*e.g*., reside at an intermediate device such as a router or a load balancer or a firewall device between the one of the client devices 10(1)-10(n) and one of the servers 30(1)-30(n)).

It is to be understood that FIG. 1 illustrates an exemplary simplified network traffic management system 100 to which many variations may be made. For example, other types and numbers of systems, devices, components, and elements in other topologies may be used to add into the illustrated system or replace any part of the illustrated system. Furthermore, one or more of the components depicted in the network traffic management system 100, such as the network traffic management apparatus 20, may be configured to operate as virtual instances on the same or different physical machine(s). In some scenarios, the network traffic management apparatus 20 may operate as more than one separate devices at different physical devices, and communicatively connected with each other through communication network 40 or other relevant network(s) as needed, rather than operate on the same physical device as illustrated in FIG. 1.

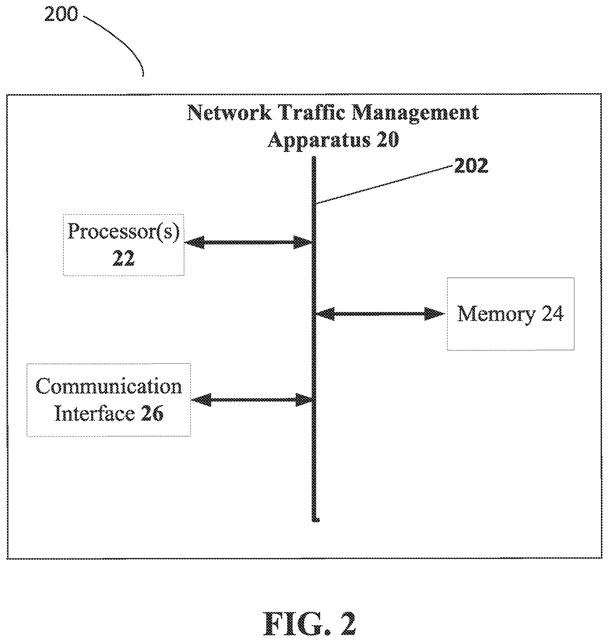

FIG. 2 shows an exemplary execution environment 200 of the network traffic management apparatus 20. In the execution environment 200, the network traffic management apparatus 20 may include processor(s) 22, a memory 24, a communication interface 26 and/or other circuitries, which are coupled together by a bus 202 or other communication link. It is to be understood that the network traffic management apparatus 20 may include other types and/or numbers of elements in other configurations. The processor(s) 22 of the network traffic management apparatus 20 may execute programmed instructions stored in the memory 24 of the network traffic management apparatus 20 for any number of the operations or tasks identified in this disclosure. The processor(s) 22 of the network traffic management apparatus 20 may include one or more central processing units (CPU) or general-purpose processors with one or more processing cores, for example, although other types of processor(s) can also be used. The communication interfaces 26, which may support wireless, e.g., Bluetooth, Wi-Fi, WLAN, cellular (4G, LTE/A, 5G), and/or wired, Ethernet, Gigabit Ethernet, optical networking protocols. The communication interfaces 26 may also include serial interfaces, such as universal serial bus (USB), serial ATA, IEEE 1394, lighting port, I2C, slimBus, or other serial interfaces. In some examples, the execution environment 200 may further include power functionalities and various input interfaces (not shown in FIG. 2). In some examples, the execution environment 200 may further include a user interface that may include human-to-machine interface devices and/or graphical user interfaces (GUI).

The memory 24 of the network traffic management apparatus 20 may store these programmed non-transitory computer-readable instructions for one or more aspects of the technology as described and illustrated herein, although some or all of the programmed instructions could be stored elsewhere. A variety of different types of memory storage devices, such as random access memory (RAM), read only memory (ROM), Hard Disk Drive (HDD), solid state drives, flash memory, Erasable Programmable Read Only Memory (EPROM), or other computer readable medium such as magnetic or optical disc (e.g., Compact Disc Read Only Memory (CD-ROM)) which is read from and written to by a magnetic, optical, or other machine-readable medium that is coupled to the processor(s) 22, may be used as the memory 24. Accordingly, the memory 24 of the network traffic management apparatus 20 may store application(s) that can include computer executable instructions that, when executed by the network traffic management apparatus 20, cause the network traffic management apparatus 20 to perform actions or operations, such as to transmit, receive, or otherwise process messages, for example, and to perform other actions or operations described and illustrated below with reference to the drawings. An application may be implemented as a unit, module, component, instance, or engine of other applications and/or operating system extensions, plugins, or the like. The application(s) can be executed within or as virtual machine(s) or virtual server(s) that may be managed in a cloud-based computing environment, without being tied to one or more specific physical network devices.

The methods, devices, processing, circuitry, and logic described below may be implemented in many different ways and in many different combinations of hardware, software, firmware, or combination thereof. For example, all or parts of the implementations may be circuitry that includes an instruction processor, such as a Central Processing Unit (CPU), microcontroller, or a microprocessor; or as an Application Specific Integrated Circuit (ASIC), Programmable Logic Device (PLD), or Field Programmable Gate Array (FPGA); or as circuitry that includes discrete logic or other circuit components, including analog circuit components, digital circuit components or both; or any combination thereof. The circuitry may include discrete interconnected hardware components or may be combined on a single integrated circuit die, distributed among multiple integrated circuit dies, or implemented in a Multiple Chip Module (MCM) of multiple integrated circuit dies in a common package, as examples.

Accordingly, the circuitry may store or access instructions for execution or may implement its functionality in hardware alone. The instructions may be stored in a tangible storage medium (e.g., memory 24) that is other than a transitory signal. A product, such as a computer program product, may include a storage medium and instructions stored in or on the medium, and the instructions when executed by the circuitry in a device may cause the device to implement any of the processing described above or illustrated in the drawings.

The implementations discussed herein may be distributed. For instance, the circuitry may include multiple distinct system components, such as multiple processors and memories, and may span multiple distributed processing systems. Parameters, databases, and other data structures may be separately stored and managed, may be incorporated into a single memory or database, may be logically and physically organized in many different ways, and may be implemented in many different ways. Example implementations include linked lists, program variables, hash tables, arrays, records (e.g., database records), objects, and implicit storage mechanisms. Instructions may form parts (e.g., subroutines or other code sections) of a single program, may form multiple separate programs, may be distributed across multiple memories and processors, and may be implemented in many different ways. Example implementations include stand-alone programs, and as part of a library, such as a shared library like a Dynamic Link Library (DLL). The library, for example, may contain shared data and one or more shared programs that include instructions that perform any of the processing described above or illustrated in the drawings, when executed by the circuitry.

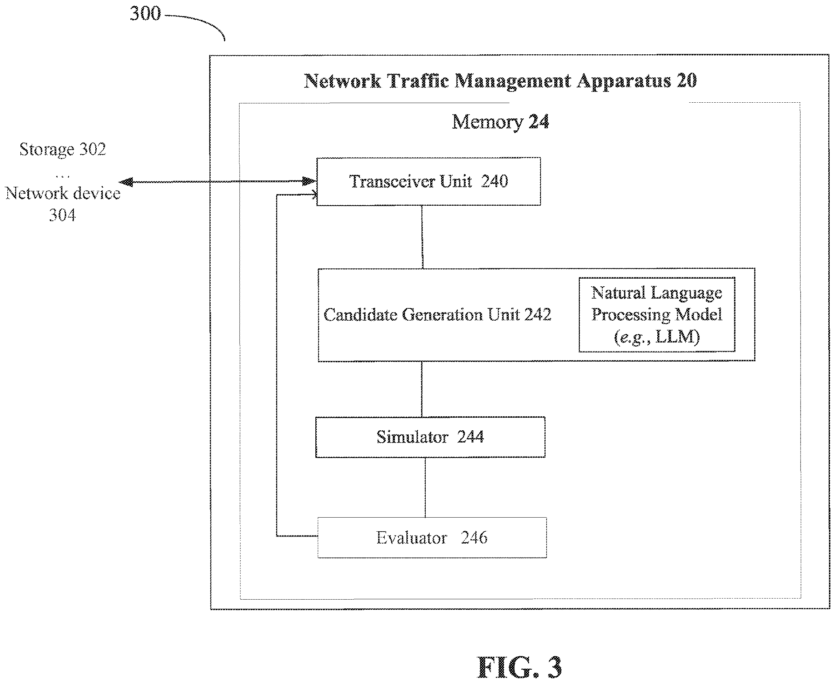

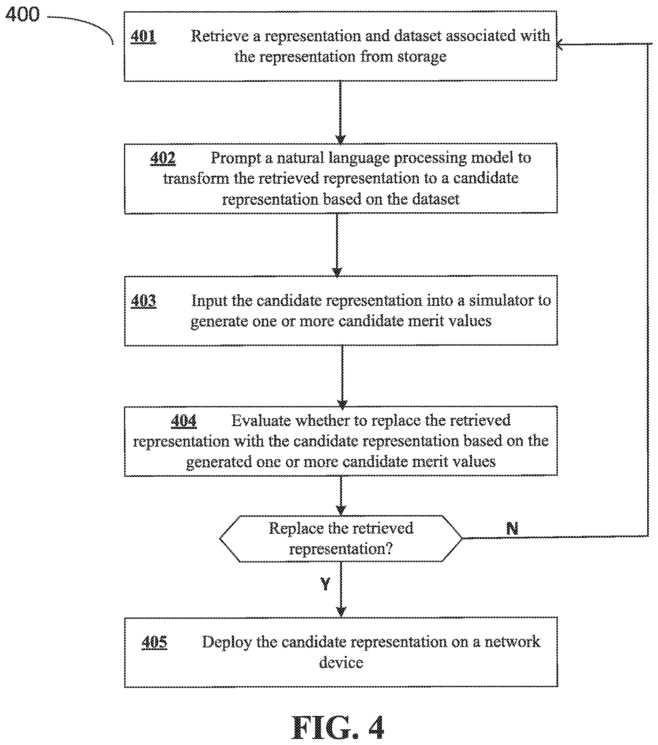

Referring to FIG. 3, an exemplary block diagram of the network traffic management apparatus 20 to optimize a representation is illustrated. In FIG. 3, the network traffic management apparatus 20 may comprise Transceiver Unit 240, Candidate Generation Unit 242, Simulator 244 and evaluator 246. Operations performed by those units will be described in conjunction with the flow diagram illustrated in FIG. 4. Those units described herein may be implemented with various available or appropriate programing APIs, such as JavaScript, Python, etc.

The term "unit" (and other similar terms such as module, submodule, etc.) may refer to computing software, firmware, hardware, and/or various combinations thereof. At a minimum, however, units are not to be interpreted as software that is not implemented on hardware, firmware, or recorded on a non-transitory processor readable recordable storage medium. Indeed, "unit" is to be interpreted to include at least some physical, non-transitory hardware such as a part of a processor, circuitry, or computer. Two different units may share the same physical hardware *(e.g.,* two different units can use the same processor and network interface). The units described herein can be combined, integrated, separated, and/or duplicated to support various applications. Also, a functionality described in this example as being performed at a particular unit can be performed at one or more other units and/or by one or more other devices instead of or in addition to the functionality performed at the particular unit. Further, the units can be implemented across multiple devices and/or other components local or remote to one another. Additionally, the units can be moved from one device and added to another device, and/or can be included in both devices. The units can be implemented in software stored in memory or non-transitory computer-readable medium. The software stored in the memory or medium can run on a processor or circuitry (e.g., ASIC, PLA, DSP, FPGA, or any other integrated circuit) capable of executing computer instructions or computer code. The units can also be implemented in hardware using processors or circuitry on the same or different integrated circuit.

FIG. 4 illustrates a flow diagram of an exemplary process 400 for optimizing a representation, which can be implemented or executed by the network traffic management apparatus 20. As discussed above, the network traffic management apparatus 20 may reside at and be implemented on any appropriate device(s). Also, the network traffic management device 20 may be distributed on different devices in the network. In the following, steps illustrated in FIG. 4 will be described in conjunction with the logic of the network traffic management apparatus 20 shown in FIG. 3.

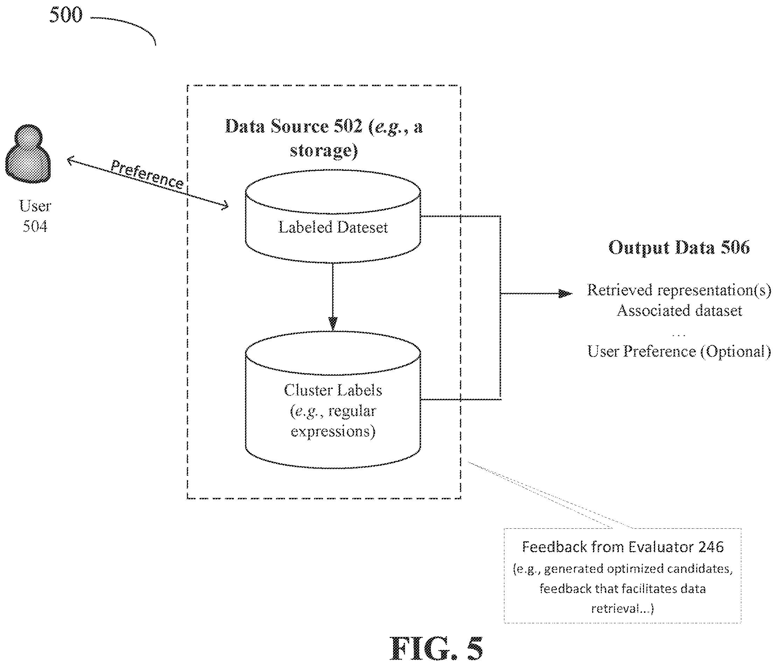

At step 401, the transceiver unit 240 of the network traffic management apparatus 20 may retrieve a representation and dataset associated with the representation from storage 302 *(e.g.,* the data source 502 in FIG. 5), although the representation(s) can be stored and retrieved from other locations. It is to be understood that "a" representation is not a limitation to the number of representations to be retrieved. That is to say, one, two, or any appropriate number of representations may be retrieved at step 401.

The dataset associated with the retrieved representation(s) may include various records or events relating to the representations(s). By way of example, the dataset may be records or events captured from traffic flows which match the pattern(s) being detected. As non-limiting examples merely for illustration, the records may be lines from one or more log files, names and paths of programs being executed on some hosts, CPU and memory usage of those programs, files that program has accessed, etc. The dataset stored in the storage 302 may be pre-processed manually, semi-manually, or automatically to facilitate the operations to be performed in the following. FIG. 5 illustrates an exemplary data source 502 from where the representation and the dataset can be retrieved. A user 504 may pre-process the data stored or maintained in data source 502. Herein, user 504 can be a user of the network traffic management apparatus 20 that generates an optimized representation, or a user of the network device 304 on which the generated optimized representation is deployed, or both. By way of example, the user 504 may mark or label a set of dominant representations, dominant or popular detection instructions, or any combination of them *(e.g.,* a set of regular expressions or irules) and organize them into one or more clusters. In this example, one cluster may relate to one or several similar patterns.

The user 504 may also label or mark dataset that is associated with those labeled representations and/or detection instructions. In this regard, the user 504 may label that data manually, or automatically by for example, using a classification model. Additionally, or alternatively, the user 504 may also choose to generate associated data (*e.g*., have similar character to the labeled dataset or the related detection instruction or representation), which can be all or a portion of the labelled dataset as shown in FIG. 5. This may be implemented by a generator that utilizes a machine learning technique (*e.g*., a natural language processing model such as a large language model (LLM), or hidden Markov model) to generate data of a certain type and/or having certain character(s), which may be specified by a user. Moreover, FIG. 5 also shows user preference(s) which may be optionally stored in the data source 502, which will be described in more details below.

It is to be understood that the data maintained in the data source 502 as shown in FIG. 5 may be historical data and updated from time to time. Therefore, the number of clusters and labeled detection instructions may get larger and larger over time and this would be the same for the labeled dataset. As discussed above, the number of detection instructions could be very large, resulting in a very large number of associated datasets which may be several times the number of detection instructions. This is the same for the labeled detection instruction or representations and also the related labeled dataset. Therefore, it may become impossible to provide all the labeled data sets associated with a given retrieved representation. Accordingly, in this case, a sampling technique may be utilized when retrieving the relevant dataset. The sampling technique may comprise a sampling rule, such as randomly sampling by way of example. The sampling rule may also relate to other aspects, such as a degree of relevance where for example the labeled dataset which has a high determined relevance degree, i.e., highly related to the retrieved representation(s), may be sampled first or at an early stage than the other labeled datasets having a lower determined relevance degree. Similarly, a sampling operation may also be applied when the transceiver unit 240 retrieves the representation(s). As an example, representations that have been determined (*e.g*., labeled by user 504) as consuming less resource of the network device 304 (*e.g*., lower than a corresponding predetermined threshold), introducing less latency (*e.g*., lower than a corresponding predetermined threshold) or having a high accuracy (*e.g*., higher than a corresponding predetermined threshold) may be sampled first. Herein, the sampling rule may be determined or selected based on the preference(s) of user 504 (*e.g*., dominant or interested detection instructions or representations for the user 504).

At step 402, the candidate generation unit 242 of the network traffic management apparatus 20 may prompt a natural language processing model to transform the retrieved representation to a candidate representation. In this example, "a" candidate representation does not limit the number of generated candidate representations to one. Instead, the candidate generation unit 242 may generate one or more candidate representations. For example, in a scenario that the transceiver unit 240 retrieves a plurality of representations from the storage, the candidate generation unit 242 may perform the prompt operation for each of the retrieved representation separately, either sequentially or in parallel. Alternatively, the candidate generation unit 242 may operate the retrieved plurality of representations together in one prompt operation and generate one or more candidate representations for those retrieved plurality of representations. In a scenario that a plurality of representations are retrieved, as discussed above, those representations may be retrieved by a randomly sampling operation. Alternatively, all or a portion of the retrieved plurality of representations may be a set of highly related or similar representations, by way of example, if a sampling rule for sampling representations having high relevance degree is utilized.

The transformation at step 402 may be made based on the dataset which is associated with the retrieved representations, the detection instructions, or both. The generated candidate representation is different than the representation(s) input into the candidate generation unit in the detection instruction(s) included in the candidate representation. By way of example, the generated candidate representation may be a more compact one that has a fewer number of detection instructions, or an entirely different one that does not have any common detection instructions, or has some common detection instruction(s), but also has one or more new detection instruction, etc.

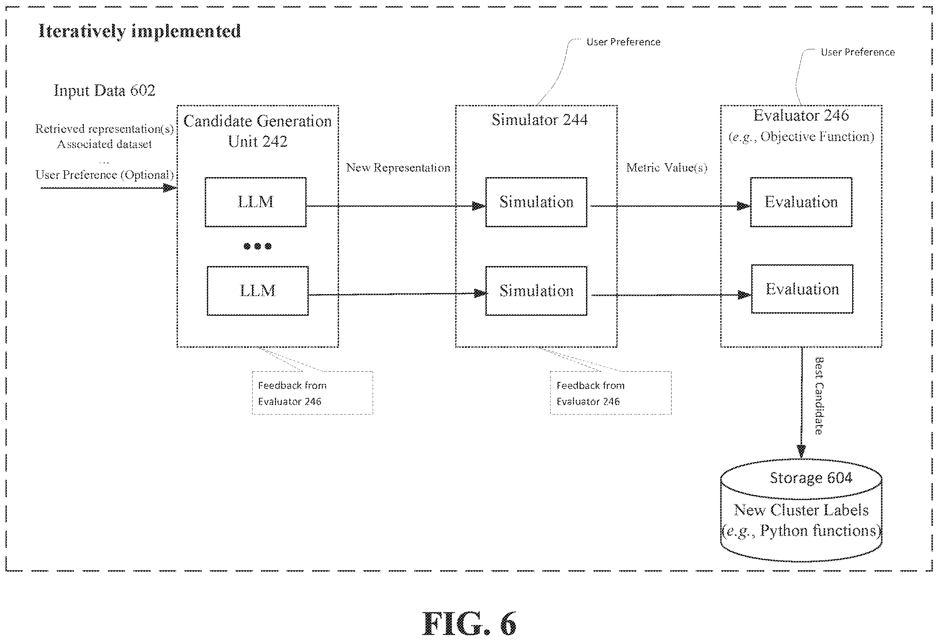

As shown in FIGS. 3 and 6, the candidate generation unit 242 may comprise one or more natural language processing models itself *(e.g.,* a large language model), or communicatively connected to such model(s). Herein, more than one natural language processing model may be utilized. By way of example, in a scenario where a plurality of representations is retrieved from the data source 502 in FIG. 5 and against which the prompt operation at step 402 is performed separately, there could be a number of LLMs which each process a portion of the retrieved representations and generate respective candidate representation(s). In some other examples, when one representation comprises a series of detection instructions, more than one LLMs may be utilized each of which processes one or more detection instructions of the representation and generates a portion of a candidate (*e.g*., one or more candidate detection instructions) respectively. Next, the candidate generation unit 242 may combine those candidate portions into one candidate representation. Alternatively, each candidate portion can be processed separately and combined together at the end at the evaluator 246 in FIG. 6. In some examples, one LLM may be utilized to perform step 402, depending on the complexity of the model, the computing capability of a device or other factors.

FIG. 6 illustrates an exemplary flow diagram wherein the output data 506 from the data source 502 illustrated in FIG. 5 is used as input data 602 to optimize a representation. In Fig. 6, a plurality of LLMs is deployed in the candidate generation unit 242 to generate candidate(s) based on the input data 602.

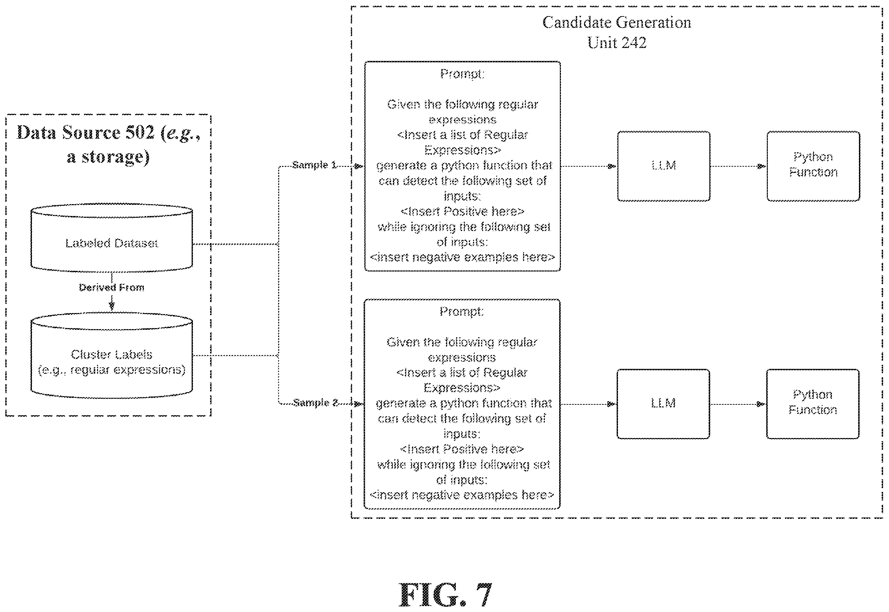

FIG. 7 illustrates an exemplary flow diagram for prompting two LLMs of the LLMs in FIG. 6 to generate candidates in the form of a python function. As shown in FIG. 7, a plurality of regular expressions, which may come from one or several representations, may be input automatically (*e.g*., input by the user 504 in advance and stored in the network traffic management apparatus 20, or generated by the network traffic management apparatus 20 automatically) or manually by a user (*e.g*., user 504 in FIG. 5 along with the implementation of the prompt operation) to be included in a prompt. Moreover, the associated dataset is also included in the prompt. Herein, the associated dataset not only comprises positive ones, but also negative ones. Herein, positive data set refers to the dataset matching the retrieved representation or any of detection instruction included in the retrieved representation, while the negative dataset refers to a mismatch. For example, if the representation is used for detecting an attack, a positive record includes data having been determined as relating to a true attacking and a negative record includes data having been determined as not an attack. It is to be understood that providing both positive and negative datasets (*e.g*., including positive and negative records and events) may be beneficial for a LLM to generate a candidate, but this is not necessary. In other examples, providing only a positive dataset to an LLM is also an option for the candidate generation unit 242 to generate a candidate. Similarly, in other examples only negative dataset may be provided to an LLM for the candidate generation unit 242 to generate a candidate. By performing the prompt operation of step 402, candidate representation(s) that are different from the input ones are generated, which may capture and combine all the insights in the detection instructions and associated dataset that was input into the LLM. In this example, the generated candidate may be not limited to producing the same detection instructions that are included in the retrieved representation or stored in the data source 502. Instead, in other examples, the candidate generation unit 242 may include one or more new detection instructions in the candidate representation. Herein, by way of example, the candidate generation unit 242 may generate a candidate representation by including a set of different detection instructions in the candidate representation (*e.g*., combining regular expressions into a python program and then translating it into an irule). In this way, the generated candidate representation may represent the semantics of the retrieved representation(s) in an improved way. By way of example, the generated candidate representation may represent a set of regular expressions as a single regular expression, or represent in a more efficient syntax. In some other examples, the generated candidate representation may convert the semantics of the retrieved representation(s) in one language to a representation with similar semantics in a different language (*e.g*., convert a regular expression into a python function), which can also be referred to as heterogeneous representation.

In FIG. 7, a user 504 may specify the form of a generated candidate representation *(e.g.,* a Python function, regular expressions, irule, etc.). As another example, a user 504 may specify the form is Python program. With such input by the user 504, the candidate generation unit 242 may generate a candidate in Python program that uses some advanced C code or libraries. It is to be understood that this is an additional option that can be provided for the user 504. However, an input from the user 504 for specifying the form is not necessary to perform the operations discussed herein. Instead, a default form of a generated candidate representation may be determined or set up in advance in the network traffic management apparatus 20. The candidate generation unit 242 may in other examples be configured to generate the candidate representation in an appropriate form automatically, without requiring an input from user 504.

At step 403, the candidate representation generated by the candidate generation unit 242 may be input into a simulator 244, to generate one or more candidate metric values corresponding to one or more preferred metric values specified by a user. In this example, the simulator 244 may provide one or more metrics and generate candidate metric values on a metric basis, i.e., metric by metric. Each metric may measure the processing performance of using a representation to detect a pattern of traffic flows from a different perspective.

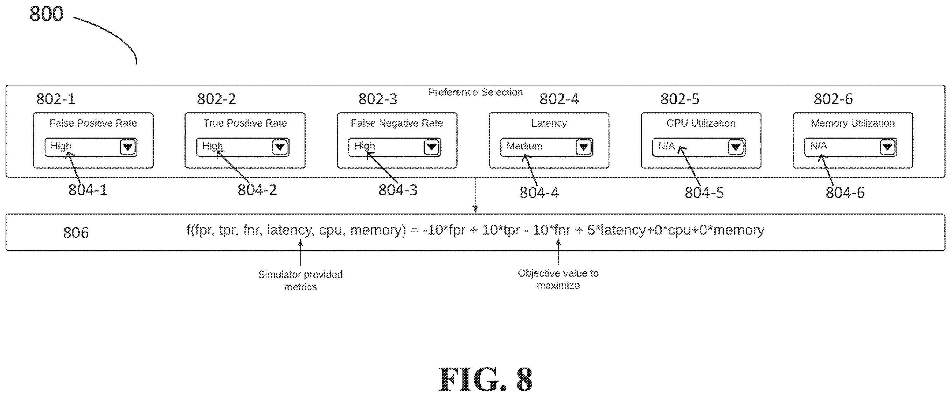

By way of example, FIG. 8 illustrates an exemplary preference selection interface 800 provided for a user 504 to specify preferred metric values. In FIG. 8, six metrics are provided to a user 504, including false positive rate 802-1, true positive rate 802-2, false negative rate 802-3, latency 802-4, CPU utilization 802-5, and memory utilization 802-6. For each of those metrics, a user 504 may choose a metric value that the user prefers to have (*e.g*., selectable preferred metric values 804-1, 804-2, 804-3, 804-4, 804-5, and 804-6) for an optimized representation(s) or for a bunch of optimized representations (*e.g*., the same or similar types or classifications of representations). It is to be understood that a user 504 is not required to choose a metric value for every metric provided thereof. Instead, the user 504 may only input a preferred metric value for only one or more metrics which is important for the user, while keep the rest blank (*e.g*., the "N/A" selected by user 504 in selectable preferred metric values 804-5 and 804-6). As a non-limiting example, a metric that the user prefers may be worth twice as much as a metric that the user does not prefer (e.g., with a metric value of 10 and 5 respectively), a metric that the user does not care about it at all may be set to zero or N/A. In FIG. 8, descriptive metric values such as high, medium are presented to a user to select, it is understood that other descriptive metric values are also appropriate *(e.g.,* low, etc). Alternatively, a user may be allowed to set the metric value(s) *(e.g.,* coefficients) manually, or is provided with an additional box to add additional metrics that not provided in the preference selection interface 800. By way of example, a user may input normalized metric values *(e.g.,* normalize the CPU usage between 0 and 1) or the number of CPU cores present *(e.g.,* from 0 to an integer). Therefore, the exemplary preference selection interface 800 in FIG. 8 provides a good number of options to a user 504. This allows the user 504 to create a series of different preferences by combining those metrics 802-1 to 802-6 differently with different values 804-1 to 804-6 (*e.g*., minimize latency at a small cost of accuracy, reduce the false positive rate and latency). In this regard, the user 504 may specify or input his/her preference, considering what kind of network device is utilized for performing the pattern detections, or the real practical network environment (*e.g*., characters and needs in the real environment). There may be a balance among different metrics for the user 504 to decide which metric is more important and which metric is less important in a specific scenario. Moreover, the preferred metric value(s) 804-1 to 804-6 specified by the user 504 may on representation basis or detection pattern basis. By way of example, the user 504 may specify same preferred metric value(s) that applies to all optimized representations for detecting the same or a bunch of similar patterns. The user 504 may input such preference information in advance which may be stored in the network traffic management apparatus, or in a real time basis while the operations described herein are implemented.

In this example, the false positive rate 802-1 may refer to a false or inaccuracy rate that, when executing a representation for pattern detection, the detection results indicating a match of a traffic flow with the pattern, but which is a false positive because the traffic flow does not actually match with the pattern (*e.g*., indicating an existence of an attack in the traffic flow during an attacking detection but it turns out to not be an attack). Similarly, the false negative rate 802-3 may refer to a false or inaccuracy rate that, the detection result indicating that there was a not match between a traffic flow and the pattern when there actually is a match (*e.g*., indicating no attack in the traffic flow but it turns out that it was an example of an attack). The false positive rate 802-1 may be calculated as FP/(FP+TN), i.e., a ratio between FP and (FP+TN). Herein, PF is the number of negative events wrongly categorized as positive (false positives), TN is the number of true negative events, and (FP+TN) is the total number of actual negative events. It is to be understood that contrary to the false positive rate 802-1, the true positive rate 802-2 may refer to an accuracy rate that when executing a representation for pattern detection, the detection results indicating a match of a traffic flow with the pattern and there is actually a match therebetween (i.e., a true positive event that was correctly categorized as positive). The metrics of latency 802-4, CPU utilization 802-5, and memory utilization 802-6 refer to, when executing a representation for pattern detection, the latency introduced into the transmissions of traffic flows, how much CPU and memory are used during the execution.

It is to be understood that the metrics 802-1 to 802-6 shown in FIG. 8 are merely for illustrative purposes and that various other metrics (*e.g*., classification accuracy) may be provided which are not limited to processing performance, as long as those other metrics provide an indication of performance that a user 504 may be interested in. In some examples, more than one preference selection interfaces may be provided to a user 504, with each preference selection interface corresponding to a particular one of a plurality of simulators. This means that in some examples a plurality of simulators may be provided to a user 504.

By way of example, multiple simulators performing simulations are shown in the simulator 244 of FIG. 6, corresponding to the number of LLMs included in the candidate generation unit 244. Those simulators may be the same as each other or may be different based on different preferences specified by a user 504. It is also understood that the metric value(s) (*e.g*., 804-1 to 804-6 in FIG. 8) specified by a user may be in any appropriate form, by way of example, numeric *(e.g.,* the number of detection instructions can be included in the candidate representation, such as one, two, or "equal to or less than" an integer), descriptive in natural language (*e.g*., "high," "medium," "low," "better performance" of the candidate representation than the retrieved representation or detection instruction, "less" detection instructions comprised in candidate representation (i.e., a compact one as compared to the retrieved representation), a composition such as lower latency at a cost of higher false positive or false negative rate), threshold, etc. FIG. 8 also shows an objective function 806, which will be described below in conjunction with step 404.

Referring back to FIGS. 3 and 6, the simulator 244 may be implemented in various manners. By way of example, the simulator 244 may be a virtual machine which measures the performance of the candidate representation generated by the candidate generation unit 242 and generate corresponding candidate metric values. In this example, the measuring is conducted by measuring the metrics when executing the candidate representation against simulation data (i.e., data used for simulation purpose, against which candidate representations are executed to generate metric value(s)). For example, the simulator 244 may measure how much latency 802-4 there is when the candidate representation is executed against the simulation data and generate a candidate metric value for the metric of latency. As another example, the simulator 244 may monitor whether a candidate representation can detect the pattern and its accuracy (*e.g*., false positive rate 802-1, false negative rate 802-3, true positive rate 802-2, or true negative rate which is not shown in FIG. 8). In this example, the performance relates to the one or more metrics for which the user 504 specified for one or more corresponding preferred metric values *(e.g.,* 804-1 to 804-4 in FIG. 8). This means, the simulator 244 does not necessarily measure performances covering all the metrics (*e.g*., 802-1 to 802-6 in FIG. 8) provided to the user, but only a subset of ones that the user 504 is interested in *(e.g.,* 804-1 to 804-4 in FIG. 8).

In some examples, the simulator 244 may use a natural language processing model (*e.g*., LLM(s)) to conduct the simulations. In this regard, the simulator 244 may simply sample certain amounts of real data from storage (*e.g*., storage 302 in FIG. 3, or data source 502 in FIG. 5) as the simulation data. In some other examples, a LLM may generate synthetic data from either a real or a testing environment to simulate complex scenarios or behaviors emerged in historical traffic flows as a supplemental simulation data. For example, a prompt can be "here is a candidate representation and this is the original representation, please generate synthetic data that helps me differentiate these two representations."

Next, the generated synthetic data may facilitate a simulation and therefore a subsequent evaluation about whether the generated candidate representation is an optimized one from certain perspectives. As another example, if a pattern to be detected relates to an attack, the LLM may simulate complex benign and malicious behaviors based on the generated synthetic data (*e.g*., traffic flows initiated by attackers and non-attackers traversing a website respectively). In some examples, during the synthesis, the simulator 244 may also utilize the candidate representation to produce related synthetic data as supplemental simulation data. Alternatively, in some examples, the simulator 244 may retrieve data associated with the candidate representation (*e.g*., from the data source 502 in FIG. 5 or other sources) from a real environment.

Next, the simulator 244 may randomly combine all those relevant various data for simulation. In the example shown in FIG. 6, the method is implemented iteratively which will be described in the following, and the simulator 244 may further utilize any of the candidate representations generated in previous iterations. Taking for example the network traffic management apparatus 20 residing on a virtual Big-IP device as an exemplary application scenario, the simulator 244 may be implemented as an irule simulator. Such an irule simulator may generate synthetic data that exhibits similar characteristics as production data. Additionally, the irule simulator may further uses a LLM to generate additional data comprising additional behaviors which augments the simulation data.

In some examples, the simulator 244 may generate candidate metric value(s) on a representation basis. This means if a given candidate representation comprises more than one detection instructions, a candidate metric value of a specific metric indicate an overall performance of this representation, without differentiating a corresponding contribution of a respective detection instructions. Next, the whole representation is going to be evaluated at step 405, which will be described in detail in the following. In some other examples, the simulator 244 may instead generate a candidate metric value of a metric for each detection instruction included in a representation. In other words, the simulator 244 generates the candidate metric values on a detection instruction basis or level. Then when proceeding to step 405, the detection instructions may be evaluated separately.

In some examples, the original representation which is retrieved at step 401 is also input into the simulator 244 to generate metric value(s), in order to show performance differences between the original and the generated candidate representation. This may provide a relatively straightforward comparison to show whether the candidate representation is an optimized representation as compared to the original representation(s), and how much the has been optimized. However, this is not necessary for performing the operations discussed in this example. For example, it may be only the generated candidate representations being input into the simulator 244 to obtain the performances indicated by the generated candidate metric value(s). Next, those candidate metric values may be compared with pre-determined standards or rules *(e.g.,* an acceptable value range or thresholds) to check whether the candidate is an optimized one.

At step 404, evaluator 246 of the network traffic management apparatus 20 may evaluate whether to replace the retrieved representation with the generated candidate representation. The evaluation may for example be made based on the candidate metric value(s) generated by the simulator 244 at step 403 and preferred metric value(s) of the user 504 *(e.g.,* by inputting the preferred metric values into the preference selection interface 800 in FIG. 8). Specifically, if the generated candidate metric value satisfied the use specified preferred metric value (*e.g*., based on the user's preferred metric values, the generated candidate metric value indicates a lower latency, a higher true positive rate, a lower false positive rate), this means the candidate representation is optimized at least from certain perspective. In this case, the evaluator 246 may indicate a replacement. As another example, in a scenario that the user 504 specified a preferred range, as long as the generated candidate metric value falls within that range, the generated candidate may replace the original one which is retrieved at step 401. In a scenario that the original representation is also input into the simulator at step 403, as described above, the evaluator 246 may also take into account whether the candidate is better than the original one from any perspective (*e.g*., whether the candidate is optimized in at least one perspective/in relation to one metric, or whether the candidate is a better one based on the user preference) while making the decision. Based on a preference specified by a user 504, such as a candidate representation can replace the original one if it has been optimized in one or certain number of perspectives (which can be reflected by one or more metrics), a decision of whether to perform the replacement may be made by the evaluator 246. In a scenario that the user 504 specified his/her preference of the candidate being better than the original one, the evaluator 246 may make a decision in a similar way. In other examples, the evaluation may be carried out by the evaluator 246 in a variety of different manners, such as by comparing each of the generated candidate metric value(s) with a corresponding predetermined values by way of example. The predetermined values may be defaulting values set in advance at the network traffic management apparatus 20, or input by a user 504 in advance.

In an example that the simulator 244 generates candidate metric values on a detection instruction basis as described above, the evaluator 246 may also evaluate on a detection instruction basis, i.e., detection instruction by detection instruction. In this case, separate evaluation rules or standards may be utilized from detection instruction to detection instruction. Those separate evaluation rules may be same as each other, or different from each other.

In some examples, optionally, the one or more preferred metric values specified by the user and the generated candidate metric value(s) may be quantified with an objective function. FIG. 8 illustrates an exemplary objective function 806. The objective function 806 encodes user preferences for various metrics. By inputting the generated candidate metric values into the objective function 806, more than one candidate metric values can be combined into a single result *(e.g.,* an overall numerical score indicating the optimization degree or extent). In some examples where the original representation is also simulated, the corresponding metric values of the original representation can also be input into the objective function 806 to obtain a numerical score. Accordingly, a comparison of the two numerical scores may give an indication of the optimization degree of the candidate representation. In some other examples, the one or more preferred metric values 804-1 to 804-6 specified by user 504 can be input into the objective function 806, to obtain a preferred numerical score which quantifies the one or more preferred metric values 804-1 to 804-6. For example, the objective function 806 may be used to calculate a final score by taking into account the metric values input or selected by the user, wherein a metric whose metric value is set zero is considered as irrelevant to the final calculation result. As illustrated in FIG. 8, the user selects the relative value "high" 804-1 for metric 802-1, "medium" 804-4 for metric 802-4, and N/A 804-5 and 804-6 for metrics 802-5 and 802-6. The objective function 806 converts "high" 804-1 into a coefficient "10" indicating a higher priority in the calculation, while converts "medium" 804-4 into a smaller coefficient "5" indicating a lower priority, and assign "0" to the N/A 804-5 and 804-6. In is to be understood that the assigned coefficients in objective function 806 in FIG. 8 are merely for illustrating purpose, other appropriate values and therefore weights may be assigned to different metrics in practical applications of the examples as described in this disclosure. A beneficial that the objective function 806 bring to the user is, it presents an overall score directly after calculating the relevance of various variables represented by the metrics, which may be more objective and be implemented automatically. In this case, by comparing the numerical score of the candidate representation and the preferred numerical score, an optimization degree may also be evaluated by the evaluator 246. In the examples that the preferred numerical score is calculated, the evaluator 246 may also set this score as an objective value of user 504, meeting which indicates maximum optimization is obtained. In some other examples, the result obtained by inputting the metric values into an objective function may be not a single result. Instead, the result can be on a metric basis and having a numerical score for each metric. Such a result may indicate any improvement or optimization in a more straightforward way.

It is to be understood that the evaluator 246 is deployed to evaluate whether the candidate representation generated by the candidate generation unit 244 satisfies a user's objective, and to what extent. In other words, it is used for evaluating whether there is an optimization in the candidate representation or detection instruction, and how much the optimization is and whether it meets a user's objective or preference. Therefore, in some examples wherein multiple candidate representations are generated by the candidate generation unit 242, the evaluator 246 may decide to replace the original representation with the best candidate by evaluating the respective candidate metric values generated by the simulator 244. As shown in FIG. 6, the best candidate can be stored in storage 604 and marked as a new cluster with labels. In a case that the generated candidate representation is not optimized in any aspect, or is not optimized as the user 504 expected based on the specified preferred metric value(s), the evaluator 246 may decide to store the original representation(s) retrieved at step 401 into the storage 604 *(e.g.,* in a separate cluster which may be used in feedback or simulation). Or the evaluator 246 may include the original representation(s) in a feedback and send the feedback to the data source 502 as illustrated in FIG. 5. Such original representation(s) can be stored in the data source 502 and retrieved again when step 401 is performed.

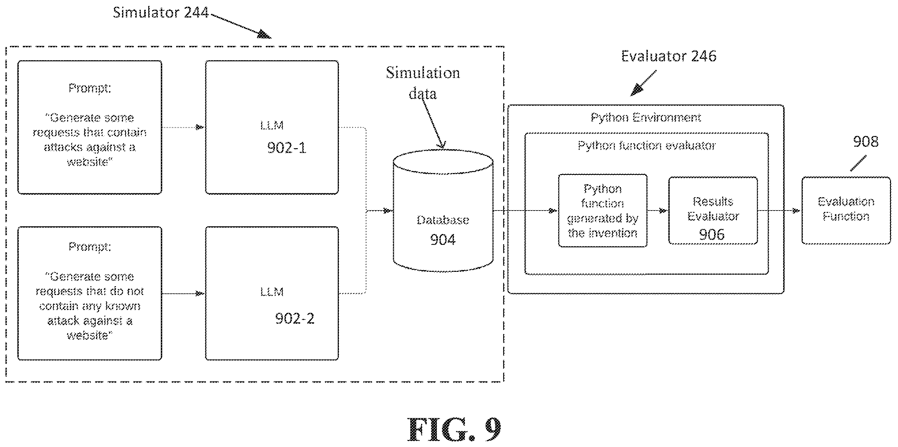

FIGS. 9-11 illustrate an exemplary simulation and evaluation process, respectively. In FIG. 9, LLMs 902-1, 902-2 are utilized to generate synthetic data as data for simulations, which is stored in database 904. As shown in FIG. 9, an evaluation function 908, which is a non-limiting example of the objective function described above, is utilized for the evaluation performed by evaluator 246. In FIG. 9, the candidate representation(s) is generated in the form of a Python function. Simulations are conducted on the candidate representation(s) during which candidate metric value(s) are generated, which then are input into results evaluator 906 for performing evaluations described above.

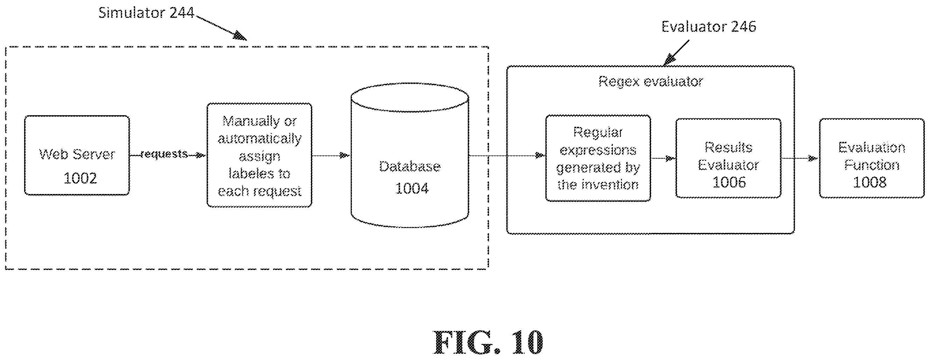

In FIG. 10, the data for performing simulations are captured from a real environment, i.e., requests transmitted to a web server 1002 are intercepted and then labeled manually or automatically. Next, the labeled data is stored in a database 1004 as simulation data. Next, similar to FIG. 9, the generated candidate representations are input into simulator 244. Next the generated candidate metrics values are input into the results evaluator 1006 for evaluation with an evaluation function 1008. As shown in FIG. 10, the candidate representation is generated as one or more regular expressions.

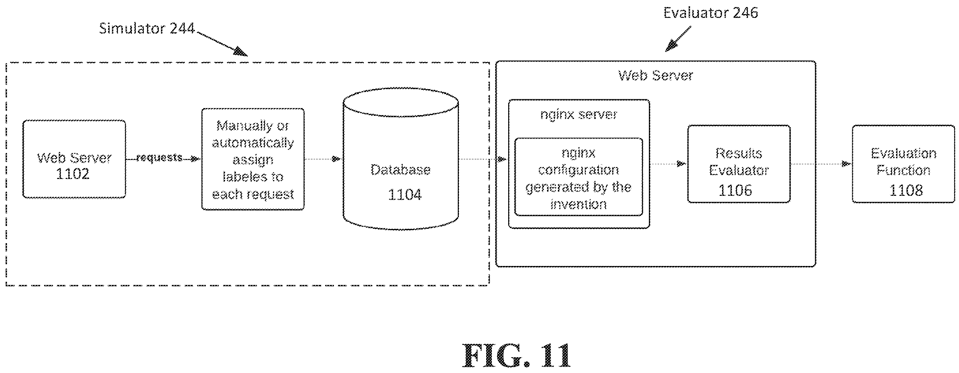

In FIG. 11, the simulation data is generated in a similar way to FIG. 10. The difference is, the candidate representation is generated in the form of nginx configuration because the simulator 244 and the evaluator 246 are running on a nginx server. Operations in FIG. 11 which are similar to FIGS. 9-10 are omitted herein.

In some examples, the steps of 402-404 can be performed for a generated candidate, if it is determined at step 404 that the generated candidate is optimized as compared to the representation(s) retrieved at step 401. The new candidate representation generated at step 402 can be referred to as a second candidate representation, and the original candidate against which the prompt operation is performed can be referred to as a first candidate representation. Specifically, dataset which is associated with the first candidate representation can be retrieved from a storage (e.g., storage 302 or data source 502), and the prompt operation of step 402 can be performed for the first candidate representation based on the retrieved dataset. As described above, there may be a large amount of related dataset stored in a storage. Therefore, there may be limitations as for the amount of data that can be input into the natural language processing models when performing the prompt operation to generate the first candidate representation, which could be a common scenario in practical environment. Accordingly, by performing step 402 for the first candidate representation based on relevant dataset that retrieved from the storage additionally to generate the second candidate representation, the first candidate representation can be refined or optimized.

In some other examples, optionally, additional representations may also be retrieved from the storage, for example, be randomly retrieved such as by a random sampling, or be retrieved based on a rule of relevance degree and thereby representation(s) relating to the first candidate representation is retrieved. Those representations additionally retrieved can be included as a basis for the prompt operation (*e.g*., be included in a prompt as shown in FIG. 7) for the first candidate representation. In this way, the number of representations stored in the storage (*e.g*., storage 302, data source 502) that have not been processed with the operations described in this disclosure may get less and less. On the other hand, the number of optimized representations (*e.g*., stored in the storage 604) can be less than the number of representations originally stored in the storage (*e.g*., storage 302, data source 502), by for example, combining several representations into one optimized representation, dropping off redundant representations, etc. Similarly, it is to be understood that the number of clusters and size of clusters may also be reduced among the optimized representations, as compared to the representations originally stored in the storage (*e.g*., storage 302, data source 502).

Next, the simulation operation of step 403 can be performed for the newly generated second candidate representation to generate one or more second candidate metric values. Subsequently, the newly generated second candidate representation is evaluated at step 404. In this case, the evaluation is performed based on the generated first candidate representation metric values and the second candidate representation metric values. In this regard, a comparison between these two sets of metric values may be made, and the second candidate representation can replace the first candidate representation if the evaluator 246 determines it is an optimized one. Next, such optimized second candidate representation can be considered as the best candidate and stored in storage 604 in FIG. 6. It is to be understood that optionally, preferred metric value(s) of user 504 can also be considered during the evaluation.

In some examples, the steps of 402-404 can be performed iteratively (*e.g*., be performed again for the second candidate representation discussed above). Therefore, the first and second candidate representations described herein do not necessarily refer to the candidate representations generated in exactly the first and second iteration. Instead, they may refer to two candidates generated sequentially in a row at any stage of an iteration, wherein a candidate representation generated first is referred to as the first candidate representation, while a candidate representation generated based on the firstly generated candidate representation in the next iteration may be referred to as the second candidate representation. This iterative strategy may be appropriate in a practical application environment for various reasons. By way of example, as discussed above, a generated candidate representation can be further refined due to the limited amount of dataset and representations can be utilized during the prompt operation in step 402. As another example, even though a candidate representation meets or satisfies preferred metric value(s), it may be determined that this candidate representation can be further optimized during the evaluation. This determination may be made based on predetermined upper limit value(s) the lower limit value(s) (*e.g*., input by the user 504 or default settings in the network traffic management apparatus 20) or based on maximize/minimize value(s) calculated with an objective function (*e.g*., objective function 806). As a non-limiting example, if the goal is to maximize a metric (*e.g*., true positive rate) or the function in general, a candidate representation is considered to be an optimized or better one than the input retrieved representation(s) if its calculated value after the simulation is greater. Similarly, if the goal is to minimize a metric (*e.g*., latency) or the function in general, then a lower value wins. By performing those steps iteratively, it is possible to keep increasing or reducing the calculated value of a generated candidate, until there is no better representations. Accordingly, it is to be understood that at each iteration, a candidate representation may be optimized (*e.g*., by removing or changing certain detection instruction(s)) in general, if the simulation and evaluation described above are performed on a representation basis and an overall result is generated during the evaluation. In some other examples, a candidate representation may be optimized in a specific metric if the simulation and evaluation described above are performed on a metric basis. The optimization may include, by way of example, a smaller size representation, a lower latency, a lower false positive/negative rate, a higher true positive/negative rate, lower CPU utilization, or any combination thereof.

The iterations may be repeated until, for example, no progress can be made towards any user preference (*e.g*., a certain level, threshold, or criteria has been reached), a maximization (*e.g*., calculated with an objective function) has been achieved, all the labeled dataset or representations in a storage are used up. By way of example, a preference specified by a user 504 may include but is not limited to, a specified number of iterations, certain performance threshold, minimum or maximum number of detection instructions included in a candidate representation, a period of time to perform the iterations (*e.g*., overnight, a week, a moth, etc.).

In some examples, the form or format of the generated candidate representation may be changed at each iteration. For example, the candidate representation may be generated as python function first, then it may be generated as irule or regular expressions expressed as an irule in a subsequent iteration. Such change may be caused by a different preference specified by user 504 *(e.g.,* input while the operations are performed or in advance), such as the user 504 specifies different forms at different stages. Or the change may be made automatically by the network traffic management apparatus 20, such as the evaluator 246 or an objective function determines to make the change.

It is to be understood that the whole process illustrated in FIG. 4 may in some examples be performed iteratively for the representations stored in a storage (*e.g*., storage 302), either sequentially or in parallel. By way of example, when retrieved representation(s) can no long be optimized or refined, a new round of operations illustrated in FIG. 4 may be performed for the rest of representations stored in the storage, i.e., for additional representation(s) retrieved from the storage by performing step 401 again. In some examples, as illustrated in FIG. 5, the generated candidate representation(s) that have been determined as optimized ones maybe included in feedback by the evaluator 246. The feedback is sent to the data storage 502 and can be stored in a related cluster. Subsequently, the candidate representation(s) may be combined with other labeled representations in the cluster and may enter into an iteration later if it is retrieved by the transceiver unit 240. In this regard, even though different than the refinements of a specific candidate representation as described above, a general refinement of the representations stored in the data source 502 is achieved by iteratively performing the process 400.

At step 405, in response to the evaluator 246 deciding to replace the retrieved representation with the candidate representation, the transceiver Unit 240 may deploy the candidate representation on a network device 304. Next, the network device 304 may execute the deployed representation which is generated as a candidate by the candidate generation unit 242 against the traffic flows coming in, to conduct pattern detection.

Referring back to FIG. 6, as discussed above, after evaluating by the evaluator 246, the best candidate representation is stored into a new cluster of storage 604. This may happen if more than one candidate representations are generated at step 402, or steps 402-404 are performed iteratively for a generated candidate. In some examples, all generated candidate representations which satisfy the preferred metric values that specified by a user 504 but not the best one may also be maintained (*e.g*., being stored separately and used for generating synthetic data for simulations, or for generating feedback to the simulator 244, candidate generation unit 242, or the information retrieval from the data source in FIG. 5). In some other examples, a generated candidate representation which is determined as not an optimized one is also stored in a storage (*e.g*., stored in storage 604 separately from the best candidate representations). In this regard, those generated candidate representations can be used in training data of LLMs or simulation data as negative examples.

As illustrated in FIG. 6, feedback from evaluator 246 may be sent to the simulator 244 for improving the simulations, to candidate generation unit 242 for improving the quality of the candidates it generates (*e.g*., refine the process to generate candidates having lower latency), to the data source 502 for improving the data retrieval (e.g., retrieve more dominant representations and/or detection instructions, highly related dataset). Similarly, even though not shown in FIG. 6, feedback may also be given by the simulator 244 to the candidate generation unit 242 and the data source 502 in FIG. 5. Similarly, feedback from the candidate generation unit 242 may be sent to the data source 502 as well.

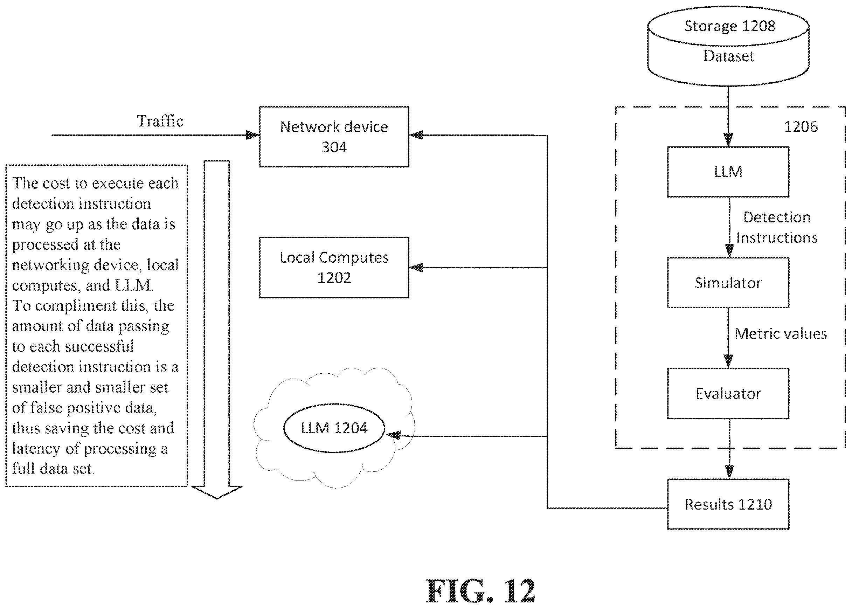

FIG. 12 illustrates an exemplary application scenario for performing the operations described in this disclosure. As shown in FIG. 12, an optimized representation may be deployed at the network device 304, the local computer 1202, which communicatively connected with and executing an LLM 1204 located in a cloud. In FIG. 12, the false positive rate is preferred to be a lower value and therefore reducing the amount of data to be further analyzed. A lower false positive rate in turn may also reduce the latency introduced by further examining the data against which a false positive detection is generated. Therefore, an optimized representation that output as results 1210 is desired to have a lowest false positive rate, which may be achieved by iteratively performing the process 1206 in the dashed box in FIG. 12 based on dataset stored in storage1208. The process 1206 is a specific example of the process 400 in FIG. 4. It is to be understood that the environment illustrated in FIG. 12 is a simplified one for illustrative purposes, and a practical real environment may be more complicated.

Based on the above descriptions of various operations and examples, a representation may be optimized. In some examples, an optimized representation may be a simplified and compact representation having a smaller number of detection instructions which may consume less resource and introduce lower latency. This may be especially advantageous in a scenario where the volume of traffic flows against which one or more representations are executed is large. The operations in this disclosure also maintain flexibility for a user by allowing the user to input his or her own preferences. In this way, the user may specify one or more perspectives to optimize the representation, depending on which metric(s) is more important or has a high priority for the user. The operations in this disclosure may adapt to various deployment environments, wherein the optimization(s) may be tuned into different directions(s) or perspectives (e.g., latency, false positive/negative rate, true positive/negative rate, etc.) by inputting different preferences. The different preferences may be reflected in the preferred metric value(s) input into the system performing the operations described herein. The use preferences may be determined based on different network devices being used on which the optimized representations are going to be deployed. In some other examples, the optimized representation may have an improvement in processing performance from a certain perspective at a cost of degraded performance in other perspective.

Throughout the specification and claims, terms may have nuanced meanings suggested or implied in context beyond an explicitly stated meaning. It will be further understood that: the term "or" may be inclusive or exclusive unless expressly stated otherwise; the term "set" may comprise zero, one, or two or more elements; the terms "some", "another," and "particular" are used as naming conventions to distinguish elements from each other and does not imply an ordering, timing, or any characteristic of the referenced items unless otherwise specified; the terms "such as", "e.g.," "for example", and the like describe one or more examples but are not limited to the described examples(s); the term "comprises" and/or "comprising" specify the presence of stated features, but do not preclude the presence or addition of one or more other features.

Reference throughout this specification to features, advantages, or similar language does not imply that all of the features and advantages that may be realized with the present solution should be or are included in any single implementation thereof. Rather, language referring to the features and advantages is understood to mean that a specific feature, advantage, or characteristic described in connection with an example is included in at least one example of the present solution. Thus, discussions of the features and advantages, and similar language, throughout the specification may, but do not necessarily, refer to the same example.

Furthermore, the described features, advantages and characteristics of the present solution may be combined in any suitable manner in one or more implementations or examples. One of ordinary skill in the relevant art will recognize, in light of the description herein, that the present solution can be practiced without one or more of the specific features or advantages of a particular implementation or example. In other instances, additional features and advantages may be recognized in certain implementations or examples that may not be present in all implementations of the present disclosure.

## Claims

1. A method implemented by a network traffic management system comprising of one or more network traffic management apparatuses, client devices, or server devices, the method comprising:
retrieving a representation and dataset associated with the representation from storage;
prompting a natural language processing model to transform the retrieved representation to a first candidate representation based on the dataset, the first candidate representation being different than the retrieved representation;
inputting the first candidate representation into a simulator to generate one or more first candidate metric values corresponding to one or more preferred metric values;
evaluating whether to replace the retrieved representation with the first candidate representation based on the generated one or more first candidate metric values and the one or more preferred metric values; and
in response to the evaluation providing an indication to replace the retrieved representation with the first candidate representation, deploying the first candidate representation on a network device of a network managed by the network traffic management system, the network device being configured to detect a pattern of a traffic flow of the network using the deployed first candidate representation.

2. The method of claim 1, wherein the evaluating further comprising:
inputting the one or more preferred metric values into an objective function to obtain a preferred numerical value quantifying the one or more preferred metric values;
inputting the generated one or more first candidate metric values into the objective function to obtain a first candidate numerical value quantifying the generated one or more first candidate metric values;
wherein the evaluating whether to replace the retrieved representation with the first candidate representation is based on a comparison between the preferred numerical value and the first candidate numerical value.

3. The method of claim 1, wherein the storage stores a plurality of representations, the retrieving further comprising:
randomly sampling the plurality of representations to obtain a sampled representation as the retrieved representation; and
retrieving the dataset associated with the retrieved representation from the storage.

4. The method of claim 1, wherein in response to the evaluation providing the indication to replace the retrieved representation with the first candidate representation, the method further comprising:
retrieving additional dataset associated with the first candidate representation from the storage;
prompting the natural language processing model to transform the first candidate representation to a second candidate representation based on the additional dataset, the second candidate representation being different than the first candidate representation;
inputting the second candidate representation into the simulator to generate one or more second candidate metric values corresponding to one or more preferred metric values;
evaluating whether to replace the first candidate representation with the second candidate representation based on the generated one or more first candidate metric values and the one or more second candidate metric values; and
in response to the evaluation providing an indication to replace the first candidate representation with the second candidate representation, deploying the second candidate representation on the network device.

5. The method of claim 1, wherein in response to the evaluation providing an indication to not replace the retrieved representation with the first candidate representation, the method further comprising:
storing the first candidate representation in the storage.

6. An apparatus, comprising memory comprising programmed instructions stored in the memory and one or more processors configured to be capable of executing the programmed instructions stored in the memory to:
retrieve a representation and dataset associated with the representation from storage;
prompt a natural language processing model to transform the retrieved representation to a first candidate representation based on the dataset, the first candidate representation being different than the retrieved representation;
input the first candidate representation into a simulator to generate one or more first candidate metric values corresponding to one or more preferred metric values;
evaluate whether to replace the retrieved representation with the first candidate representation based on the generated one or more first candidate metric values and the one or more preferred metric values; and
in response to the evaluation providing an indication to replace the retrieved representation with the first candidate representation, deploy the first candidate representation on a network device of a network managed by the network traffic management system, the network device being configured to detect a pattern of a traffic flow of the network using the deployed first candidate representation.

7. The apparatus of claim 6, wherein the evaluate further comprising:
input the one or more preferred metric values into an objective function to obtain a preferred numerical value quantifying the one or more preferred metric values;
input the generated one or more first candidate metric values into the objective function to obtain a first candidate numerical value quantifying the generated one or more first candidate metric values;
wherein the evaluate whether to replace the retrieved representation with the first candidate representation is based on a comparison between the preferred numerical value and the first candidate numerical value.

8. The apparatus of claim 6, wherein the storage stores a plurality of representations, the retrieve further comprising:
randomly sample the plurality of representations to obtain a sampled representation as the retrieved representation; and
retrieve the dataset associated with the retrieved representation from the storage.

9. The apparatus of claim 6, wherein in response to the evaluation providing the indication to replace the retrieved representation with the first candidate representation, the one or more processors are configured to be capable of executing the programmed instructions stored in the memory to:
retrieve additional dataset associated with the first candidate representation from the storage;
prompt the natural language processing model to transform the first candidate representation to a second candidate representation based on the additional dataset, the second candidate representation being different than the first candidate representation;
input the second candidate representation into the simulator to generate one or more second candidate metric values corresponding to one or more preferred metric values;
evaluate whether to replace the first candidate representation with the second candidate representation based on the generated one or more first candidate metric values and the one or more second candidate metric values; and
in response to the evaluation providing an indication to replace the first candidate representation with the second candidate representation, deploy the second candidate representation on the network device.

10. The apparatus of claim 6, wherein in response to the evaluation providing an indication to not replace the retrieved representation with the first candidate representation, the one or more processors configured to be capable of executing the programmed instructions stored in the memory to:
store the first candidate representation in the storage.

11. A non-transitory computer readable medium having stored thereon instructions, comprising executable code which when executed by one or more processors, causes the one or more processors to carry out the steps of the method according to any of the claims 1 - 5.

12. A network traffic management system, comprising one or more traffic management apparatuses, server devices, or client devices, the network traffic management system comprising memory comprising programmed instructions stored thereon and one or more processors configured to be capable of executing the stored programmed instructions to carry out the steps of the method according to any of the claims 1 - 5.
